(19)

(11) **EP 3 794 323 B1**

(12) **EUROPÄISCHE PATENTSCHRIFT**

(45) Veröffentlichungstag und Bekanntmachung des Hinweises auf die Patenterteilung:
**10.05.2023 Patentblatt 2023/19**

(21) Anmeldenummer: **19718685.1**

(22) Anmeldetag: **17.04.2019**

(51) Internationale Patentklassifikation (IPC):
***G01N 9/00*** *(2006.01)* ***G01N 11/16*** *(2006.01)*
***G01F 1/84*** *(2006.01)*

(52) Gemeinsame Patentklassifikation (CPC):
**G01F 1/8436; G01N 9/002; G01N 11/16;**
G01F 1/8477; G01N 2009/006

(86) Internationale Anmeldenummer:
**PCT/EP2019/059951**

(87) Internationale Veröffentlichungsnummer:
**WO 2019/219321 (21.11.2019 Gazette 2019/47)**

(54) **MESSGERÄT ZUM BESTIMMEN DER DICHTE, DES MASSEDURCHFLUSSES UND/ODER DER VISKOSITÄT EINES FLIESSFÄHIGEN MEDIUMS UND EIN BETRIEBSVERFAHREN DAFÜR**

MEASURING DEVICE FOR DETERMINING THE DENSITY, THE MASS FLOW RATE AND/OR THE VISCOSITY OF A FLOWABLE MEDIUM, AND METHOD FOR OPERATING SAME

APPAREIL DE MESURE DESTINÉ À DÉTERMINER LA DENSITÉ, LE DÉBIT MASSIQUE ET/OU LA VISCOSITÉ D’UN MILIEU FLUIDE ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2018 DE 102018112002**

(43) Veröffentlichungstag der Anmeldung:
**24.03.2021 Patentblatt 2021/12**

(73) Patentinhaber: **Endress + Hauser Flowtec AG**
**4153 Reinach (CH)**

(72) Erfinder:
- **ZHU, Hao**
  **85354 Freising (DE)**
- **RIEDER, Alfred**
  **84032 Landshut (DE)**
- **LIN, Yaoying**
  **85356 Freising (DE)**
- **LALLA, Robert**
  **79541 Lörrach (DE)**
- **HUBER, Reinhard**
  **79713 Bad Säckingen (DE)**

(74) Vertreter: **Hahn, Christian et al**
**Endress+Hauser Group Services (Deutschland)AG +Co. KG**
**Colmarer Straße 6**
**79576 Weil am Rhein (DE)**

(56) Entgegenhaltungen:
**DE-A1-102009 002 941** **DE-A1-102016 112 002**
**US-B2- 7 360 453**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 794 323 B1

## Beschreibung

Die vorliegende Erfindung betrifft ein Messgerät zum Bestimmen der Dichte, des Massedurchflusses und/oder der Viskosität eines fließfähigen Mediums und ein Verfahren zur Charakterisierung eines mehrphasigen Mediums, wobei das Messgerät mindestens einen Oszillator aufweist, der mit dem Medium beaufschlagbar ist, und der mindestens eine Schwingungsmode aufweist, deren Eigenfrequenz von der Dichte $\rho$ des Mediums abhängt. Ein solcher Oszillator kann ein einziges, schwingfähiges Messrohr oder ein Paar bzw. mehrere Paare von schwingfähigen Messrohren zum Führen des Mediums umfassen.

Mehrphasige Medien, können große Inhomogenitäten aufweisen, insbesondere mit Gas beladene Flüssigkeiten, wenn das Gas nicht in Form von Mikroblasen in der flüssigen Phase gelöst ist, sondern in Form von freien Blasen in der flüssigen Phase vorkommt. Das Vorkommen von freien Blasen kann eine wesentliche Eigenschaft des Mediums sein, die qualitativ und/oder quantitativ festzustellen ggf. von großem Interesse ist. Aus der Perspektive eines von einem inhomogenen Medium durchströmten Messgeräts treten die Inhomogenitäten als Dichtefluktuationen $d\rho/dt$ in Erscheinung. Letztere bewirken Fluktuationen der Schwingungsfrequenz $df/dt$ des Oszillators, welche mit der Dichtefluktuation $d\rho/dt$ korrelieren. Die Analyse der Fluktuationen der Schwingungsfrequenz $df/dt$ des Oszillators bietet demnach einen Ansatz zur Analyse der Dichtefluktuationen und damit bei gegebenem Durchfluss ein Indiz für den Grad der Inhomogenität des Mediums.

Angesichts der Vielfalt von verfügbaren gattungsgemäßen Messgerätetypen erfordert es einen großen Aufwand, zu vergleichbaren Feststellungen hinsichtlich des Vorkommens von freien Blasen mit unterschiedlichen Messgerätetypen zu gelangen. Hierzu sind in der Regel Messreihen erforderlich, in denen die Messgeräte jeweils mit Medien beaufschlagt werden, die freie Blasen enthalten, und die beobachtete Frequenzfluktuation des Oszillators wird als Funktion der Konzentration an freien Blasen bzw. als Funktion des Gasvolumenanteils GVF nach dem englischen Gas Void Fraction) erfasst. Anschließend ist ein Algorithmus zu implementieren, der die beobachtete Frequenzfluktuation mit der Inhomogenität des Mediums, insbesondere dessen Gasvolumenanteil in Beziehung setzt. Ein solches Messgerät ist auch in DE 10 2009 002 941 A1 und auch in US 7 360 453 B2 offenbart.

Es ist die Aufgabe der vorliegenden Erfindung, ein Messgerät und ein Verfahren bereitzustellen, welche eine einfacher zu implementierende Analyse von Dichtefluktuationen ermöglichen mit einer größeren Unabhängigkeit von der jeweiligen Gestalt des Messgerätes.

Die Aufgabe wird erfindungsgemäß gelöst durch das Messgerät gemäß dem unabhängigen Patentanspruch 1 und das Verfahren gemäß dem unabhängigen Patentanspruch 9.

Das erfindungsgemäße Messgerät zum Bestimmen der Dichte, des Massedurchflusses und/oder der Viskosität eines strömenden, fließfähigen Mediums umfasst einen Oszillator, der mindestens ein Messrohr zum Führen des Mediums aufweist, und der mindestens eine Schwingungsmode aufweist, deren Eigenfrequenz von der Dichte des Mediums abhängt, und einen Erreger zum Anregen der Schwingungsmode; sowie mindestens einen Schwingungssensor zum Erfassen von Schwingungen des Oszillators; und eine Betriebs- und Auswerteschaltung, die dazu eingerichtet ist, den Erreger mit einem Erregersignal zu beaufschlagen, Signale des Schwingungssensors zu erfassen, anhand der Signale des Schwingungssensors aktuelle Werte der Eigenfrequenz des Oszillators sowie Fluktuationen der Eigenfrequenz zu ermitteln, und einen Dichtefluktuationen des Mediums charakterisierenden Wert zu bestimmen, wobei der Wert von einer Funktion abhängt, die zur Fluktuation der Eigenfrequenz proportional ist und eine eigenfrequenzabhängige Normierung aufweist.

Allgemein lässt sich die Dichte $\rho$ eines Mediums anhand einer modenspezifischen Eigenfrequenz $f_i$ einer Schwingungsmode ermitteln gemäß:

$$\rho(f_i) = c_{0,i} + \frac{c_{1,i}}{f_i^2}$$

Die Koeffizienten $c_{0,i}$ und $c_{1,i}$ sind modenspezifische Koeffizienten, die vorzugsweise für jeden Messgerätetypen, bzw. jedes Messgerät zu ermitteln sind. Der Koeffizient $c_{0,i}$ wird von der Masse des das Medium führenden Messrohrs geprägt, während der Koeffizient $c_{1,i}$ von einer modenspezifischen Steifigkeit des Messrohrs abhängt. Der Koeffizient $c_{0,i}$ ist in aller Regel negativ.

Erfindungsgemäß ist die Funktion proportional zur Fluktuation der Eigenfrequenz und der dritten Potenz des Kehrwerts der Eigenfrequenz. In einer Ausgestaltung dieser Weiterbildung der Erfindung ist Funktion weiterhin proportional zu einer modalen Steifigkeit des Oszillators bei der zur Eigenfrequenz gehörenden Schwingungsmode des Oszillators, insbesondere proportional zu dem Koeffizienten $c_{1,i}$.

Das Messrohr bzw. die Messrohre können gerade oder in der Ruhelage gebogen sein. Ein gebogenes Messrohr weist vorzugsweise senkrecht zu einer durch seine Mittenlinie aufgespannten Messrohrebene eine Spiegelsymmetrie S2 oder eine Rotationssymmetrie C2 auf.

Ein Oszillator mit genau einem einzigen gebogenen schwingfähigen Messrohr, welches senkrecht zur Messrohrebene eine Spiegelsymmetrie S2 eine C2-Symmetrie aufweist, ist in der noch unveröffentlichten Patentanmeldung DE 10 2017 012 058.7 offenbart. Das Messrohr kann in verschiedenen Schwingungsmoden mit unterschiedlichen modenspezifischen Eigenfrequenzen $f_i$ zum Schwingen angeregt werden. Grundsätzlich kann die Dichte eines in dem Messrohr strömenden Mediums anhand jeder dieser Eigenfrequenzen bestimmt werden. Wenn Frequenzfluktuationen, beispielsweise aufgrund freier Blasen in einem flüssigen Medium auftreten, erlaubt die Erfindung eine zuverlässige Charakterisierung des Mediums auf Basis der Frequenzfluktuationen, und zwar unabhängig davon, welche Schwingungsmoden gerade betrieben werden.

In einer weiteren Ausgestaltung der Erfindung umfasst der Oszillator ein Paar von schwingfähigen Messrohren zum Führen des Mediums. Aufgrund der erfindungsgemäßen Analyse von Frequenzfluktuationen kann auch hier eine einfache, frequenzunabhängige Charakterisierung des Mediums erfolgen.

In einer anderen Ausgestaltung der Erfindung umfasst das Messgerät zwei voneinander unabhängige Oszillatoren mit jeweils einem Paar von Messrohren, wobei die beiden Oszillatoren für eine Biegeschwingungsnutzmode jeweils unterschiedliche Nutzmodeeigenfrequenzen aufweisen. Bei dieser Ausgestaltung der Erfindung kommt der erfindungsgemäßen Analyse der Frequenzfluktuationen zur Charakterisierung des Mediums besondere Bedeutung zu. Gewöhnlich sind gebogene Messrohre so geführt, dass die Messrohre entleerbar sind, also dass die Messrohrbogen nach oben zeigen, wobei insbesondere ein erster Oszillator mit zwei längeren Messrohren oberhalb eines zweiten Oszillators mit zwei kürzeren Messrohren angeordnet ist, wobei die Messrohre beider Oszillatoren im Wesentlichen parallel verlaufen sowie einlaufseitig und auslaufseitig in Sammlern zusammengefasst sind. Der erste Oszillator weist für eine Biegeschwingungsnutzmode eine niedrigere Eigenfrequenz auf als der zweite Oszillator für die entsprechende Biegeschwingungsnutzmode. Ein solches Messgerät ist in der Veröffentlichung WO 2016 107 694 A1 beschrieben. Aufgrund der Anordnung der Oszillatoren übereinander und des auf freie Blasen wirkenden Auftriebs können letztere in den Messrohren des ersten Resonators gegenüber jenen des zweiten Resonators angereichert werden. Die erfindungsgemäße Analyse der Frequenzfluktuationen ermöglicht es, die relative Anreicherung der freien Blasen im ersten Oszillator trotz der unterschiedlichen Eigenfrequenzen zuverlässig festzustellen, und damit die einen wertvollen Hinweis über die Beweglichkeit der freien Blasen im Medium zu erlangen.

In einer anderen Ausgestaltung der Erfindung umfasst das Messgerät zwei gekoppelte Oszillatoren mit jeweils einem Paar von Messrohren, wobei die gekoppelten Oszillatoren eine gleichphasige und eine gegenphasige Biegeschwingungsnutzmode mit jeweils unterschiedliche Nutzmodeeigenfrequenzen aufweisen Ein solches Messgerät ist in der noch unveröffentlichten Patentanmeldung DE 10 2016 125 615.3 offenbart. Die erfindungsgemäße Analyse der Frequenzfluktuationen kann bei beiden Nutzmodeeigenfrequenzen, durchgeführt werden, und ermöglicht eine frequenzunabhängige Charakterisierung des Mediums.

In einer Weiterbildung der Erfindung umfasst der das Medium charakterisierende Wert einen Index zum Klassifizieren des Mediums.

Das Bestimmen eines Massedurchflussmesswerts des Mediums erfolgt in bekannter Weise anhand einer Phasendifferenz zwischen einem einlassseitigen Schwingungssensor und einem auslassseitigen Schwingungssensor. Das Bestimmen eines Viskositätsmesswerts des Mediums kann beispielsweise in bekannter Weise anhand eines Amplitudenverhältnisses zwischen Erregersignal und den Signalen der Schwingungssensoren erfolgen. In einer Weiterbildung der Erfindung ist die Betriebs- und Auswerteschaltung dazu eingerichtet, einem Dichtemesswert, einem Massedurchflussmesswert und/oder einem Viskositätsmesswert eine Bewertung zuzuordnen, die von dem die Dichtefluktuation charakterisierenden Wert abhängt, und beispielsweise auf den Grad der Inhomogenität des Mediums hinweist.

Das erfindungsgemäße Verfahren zum Bestimmen der Dichte, des Massedurchflusses und/oder der Viskosität eines fließfähigen Mediums, insbesondere mit einem erfindungsgemäßen Messgerät, umfasst: Anregen und Erfassen von Schwingungen mindestens einer Schwingungsmode eines Oszillators, der mit dem Medium beaufschlagt ist, wobei die mindestens eine Schwingungsmode eine Eigenfrequenz aufweist, die von der Dichte des Mediums abhängt; Ermitteln einer Folge von aktuellen Werten der Eigenfrequenz des Oszillators sowie Fluktuationen der Eigenfrequenz; und Bestimmen eines Dichtefluktuationen des Mediums charakterisierenden Werts, wobei der Wert von einer Funktion abhängt, die zur Fluktuation der Eigenfrequenz proportional ist und eine eigenfrequenzabhängige Normierung aufweist, wobei die Funktion proportional zur Fluktuation der Eigenfrequenz und zur dritten Potenz des Kehrwerts der Eigenfrequenz ist.

In einer Ausgestaltung dieser Weiterbildung der Erfindung ist die Funktion weiterhin proportional zu einer modalen Steifigkeit des Oszillators bei der zur Eigenfrequenz gehörenden Schwingungsmode des Oszillators.

In einer Weiterbildung des erfindungsgemäßen Verfahrens umfasst der das Medium charakterisierende Wert einen Index, zum Klassifizieren des Mediums, insbesondere zum Klassifizieren hinsichtlich seiner Gasbeladung.

Die Erfindung wird nun anhand der in den Zeichnungen dargestellten Ausführungsbeispiele beschrieben. Es zeigen:

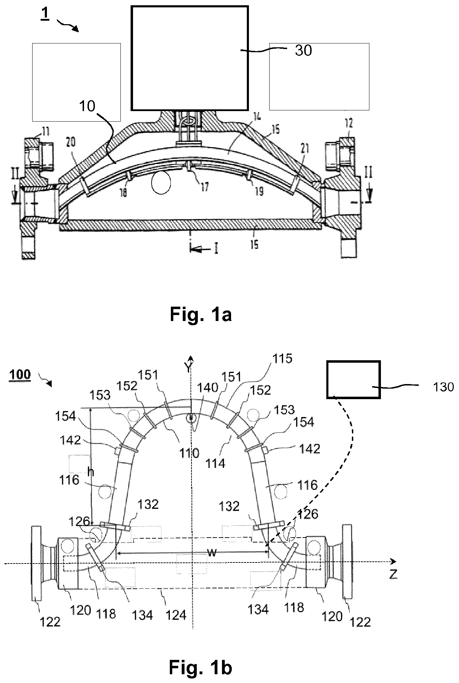

Fig. 1a: eine schematische Darstellung eines ersten Ausführungsbeispiels eines erfindungsgemäßen Dichtemessers;

Fig. 1b: eine schematische Darstellung eines zweiten Ausführungsbeispiels eines erfindungsgemäßen Dichtemessers;

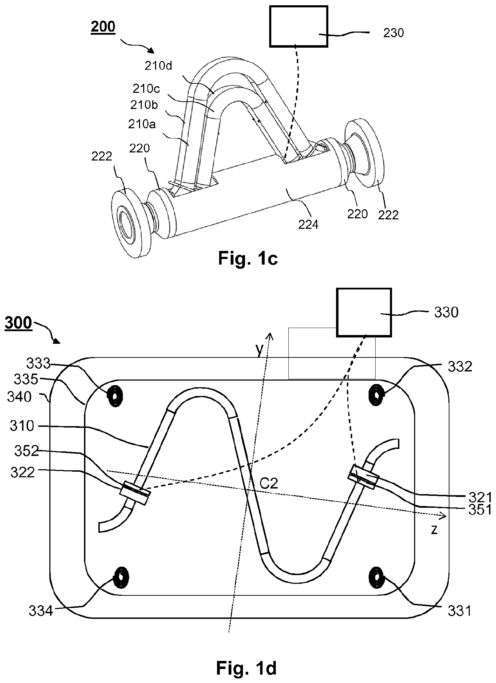

Fig. 1c: eine schematische Darstellung eines dritten Ausführungsbeispiels eines erfindungsgemäßen Dichtemessers;

Fig. 1 d: eine schematische Darstellung eines vierten Ausführungsbeispiels eines erfindungsgemäßen Dichtemessers; und

Fig. 2: ein Flussdiagramm eines ersten Ausführungsbeispiels des erfindungsgemäßen Verfahrens.

Die in Fign. 1a bis 1d dargestellten Massedurchflussmesser nach dem Coriolis-Prinzip sind hinsichtlich der Struktur ihres Messaufnehmers alle bekannt, wobei die Oszillatoren dieser Messaufnehmer bei gegebener Mediendichte unterschiedliche Eigenfrequenzen aufweisen. Durch die Weiterbildung zu einem erfindungsgemäßen Dichtemesser können diese Geräte nunmehr die Dichtefluktuationen eines Mediums in vergleichbarer Weise charakterisieren.

Das in Fig. 1a dargestellte erste Ausführungsbeispiel eines erfindungsgemäßen Messgeräts 1 umfasst einen Oszillator 10, der ein Paar von parallel geführten schwingfähigen Messrohren 14 umfasst, die sich zwischen einem einlassseitigen Flansch 11 und einem auslassseitigen Flansch 12 erstrecken, wobei die Flansche jeweils einen Strömungsteiler bzw. Sammler umfassen, in den die Messrohre 14 münden. Die Strömungsteiler sind durch ein starres Gehäuse 15 miteinander verbunden, so dass Schwingungen der die Messrohre aufnehmenden Strömungsteiler im Bereich von Schwingungsfrequenzen von Biegeschwingungsnutzmoden des Oszillators wirksam unterdrückt sind. Die Messrohre 10 sind mit einer einlassseitigen Knotenplatte 20 und einer auslassseitigen Knotenplatte 21 starr verbunden, wobei die Knotenplatten Schwingungsknoten des durch die beiden der Messrohre 14 gebildeten Oszillators 10 definieren, und damit die Frequenzen der Biegeschwingungsnutzmoden weitgehend festlegen. Der Oszillator 10 wird mit einem zwischen den beiden Messrohren 14 wirkenden elektrodynamischen Erreger 17 zum Schwingen angeregt, wobei die Schwingungen mittels zweier Relativbewegungen der Messrohre 14 zueinander erfassender Schwingungssensoren 18, 19 detektiert werden. Der Erreger 17 wird von einer Betriebs- und Auswerteschaltung 30 gespeist, wobei letztere auch die Signale der Schwingungssensoren erfasst und auswertet, um einen Dichtemesswert und ggf. einen Massedurchflussmesswert zu ermitteln. Die Betriebs- und Auswerteschaltung 30 ist erfindungsgemäß ebenfalls dazu eingerichtet, Dichtefluktuationen anhand der Frequenzfluktuationen zu ermitteln und zu signalisieren.

Das in Fig. 1b dargestellte zweite Ausführungsbeispiel eines erfindungsgemäßen Messgeräts 100 umfasst einen Oszillator 110, der ein Paar von parallel geführten schwingfähigen Messrohren 114 umfasst, die sich zwischen einem einlassseitigen und einem auslassseitigen Strömungsteiler 120 erstrecken, in welche die Messrohre 114 münden, wobei an die Strömungsteiler jeweils ein Flansch 122 zur Montage des Messgeräts 100 in einer Rohrleitung anschließt. Die Strömungsteiler 120 sind durch ein starres Trägerrohr 124 miteinander verbunden, so dass Schwingungen der die Messrohre 114 aufnehmenden Strömungsteiler im Bereich von Schwingungsfrequenzen von Biegeschwingungsnutzmoden des Oszillators 110 wirksam unterdrückt sind. Die Messrohre 114 sind einlassseitig und auslassseitig jeweils mittels zweier Knotenplatten 132, 134 starr miteinander verbunden, wobei die Knotenplatten Schwingungsknoten des durch die beiden der Messrohre 114 gebildeten Oszillators 110 definieren, und damit die Frequenzen der Biegeschwingungsnutzmoden weitgehend festlegen. Die Messrohre 114 weisen im Verhältnis eines Längsabstands w zwischen den inneren der Knotenplatten 134 einen erheblich höheren Messrohrbogen mit einer Höhe h auf, als dies im ersten Ausführungsbeispiel der Fall ist. Hierzu weisen die Messrohre einlassseitig und auslassseitig jeweils einen an die Sammler 120 anschließenden aufwärts gerichteten, bogenförmigen Abschnitt 118 auf, der durch eine Öffnung 126 aus dem Trägerrohr 124 herausgeführt ist. An die gebogenen Abschnitte 118 schließt jeweils ein gerader Abschnitt 116 an, wobei die geraden Abschnitte durch einen bogenförmigen Mittenabschnitt 115 verbunden sind. Die Mittenabschnitte 115 der beiden Messrohre weisen jeweils ringförmige Versteifungselemente 151, 152, 153 auf, um eine Querempfindlichkeit des Messgerätes gegenüber Druckschwankungen zu minimieren. Die Form der Messrohre 114 des zweiten Ausführungsbeispiels ist auf eine möglichst genaue Dichtemessung hin optimiert. Die höhere Bogenform der Messrohre 114 führt im Vergleich zum ersten Ausführungsbeispiel bei vergleichbaren Biegeschwingungsmoden jedoch zu erheblich niedrigeren Eigenfrequenzen.

Der Oszillator 110 wird mit einem zwischen den beiden Messrohren 114 wirkenden elektrodynamischen Erregers 140 zum Schwingen angeregt, wobei die Schwingungen mittels zweier Relativbewegungen der Messrohre 114 zueinander erfassender Schwingungssensoren 142 detektiert werden. Der Erreger 140 wird von einer Betriebs- und Auswerteschaltung 130, wobei letztere auch die Signale der Schwingungssensoren erfasst und auswertet, um einen Dichtemesswert und ggf. einen Massedurchflussmesswert zu ermitteln. Die Betriebs- und Auswerteschaltung 130 ist erfindungsgemäß ebenfalls dazu eingerichtet, Dichtefluktuationen anhand der Frequenzfluktuationen zu ermitteln und zu signalisieren.

Das in Fig. 1c dargestellte dritte Ausführungsbeispiel eines erfindungsgemäßen Messgeräts 200 umfasst einen ersten Oszillator, der ein erstes Paar von parallel geführten schwingfähigen Messrohren 210a und 210 b aufweist, und einen zweiten Oszillator, der ein zweites Paar von parallel geführten schwingfähigen Messrohren 210c und 210 d aufweist. Sämtliche Messrohre erstrecken sich zwischen einem einlassseitigen und einem auslassseitigen Strömungsteiler 220, in welche die Messrohre münden, wobei an die Strömungsteiler 220 jeweils ein Flansch 222 zur Montage des Messgeräts 200 in einer Rohrleitung anschließt. Die Strömungsteiler 220 sind durch ein starres Trägerrohr 224 miteinander verbunden, so dass Schwingungen der die Messrohre aufnehmenden Strömungsteiler im Bereich von Schwingungsfrequenzen von Biegeschwingungsnutzmoden der Oszillatoren wirksam unterdrückt sind. Die Messrohre des ersten Oszillators weisen im Vergleich zu den Messrohren des zweiten Oszillators einen erheblich höheren Messrohrbogen auf, so dass die Eigenfrequenzen der Biegeschwingungsmoden des ersten Oszillators wesentlich niedriger sind als die Eigenfrequenzen der entsprechenden Biegeschwingungsmoden des zweiten Oszillators. Die Oszillatoren werden jeweils mit einem zwischen den beiden Messrohren des Oszillators wirkenden elektrodynamischen Erreger zum Schwingen angeregt, wobei die Schwingungen jeweils mittels zweier Relativbewegungen der Messrohre zueinander erfassender Schwingungssensoren detektiert werden. Die hier nicht dargestellten Erreger werden von einer mit Erregersignalen gespeist, wobei die Betriebs- und Auswerteschaltung 230 auch dazu eingerichtet ist, Signale der hier ebenfalls nicht dargestellten Schwingungssensoren zu erfassen und auszuwerten, um einen Dichtemesswert und ggf. einen Massedurchflussmesswert zu ermitteln. Die Betriebs- und Auswerteschaltung 230 ist erfindungsgemäß ebenfalls dazu eingerichtet, Dichtefluktuationen anhand der Frequenzfluktuationen zu ermitteln und zu signalisieren.

Das in Fig. 1d dargestellte vierte Ausführungsbeispiel eines erfindungsgemäßen Messgeräts 300 umfasst einen Oszillator, der ein s-förmig gebogenes, schwingfähiges Messrohr 310 mit einer C2-Symmetrie senkrecht zur Messrohrebene aufweist. Das Messrohr 310 ist einlassseitig und auslassseitig in starren Lagerblöcken 321, 322 gelagert, welche ihrerseits auf einer starren Trägerplatte 335 verankert sind, so dass Schwingungen der Lagerblöcke 321, 322 im Bereich von Schwingungsfrequenzen von Biegeschwingungsnutzmoden des Oszillators wirksam unterdrückt sind. Die Trägerplatte 335 ist über Spiralfedern 331, 332, 333, 334 in einer Gehäusebasis 340 verbunden und von Schwingungen der Gehäusebasis im Bereich von Schwingungsfrequenzen von Biegeschwingungsnutzmoden des Oszillators entkoppelt. An den Lagerblöcken 321, 322 ist jeweils eine integrierte piezoelektrische Erreger- und Sensoreinheit 351, 352 angeordnet, mit welchen der Oszillator in Biegeschwingungsmoden innerhalb der Messrohrebene und senkrecht dazu angeregt werden kann. Die Biegeschwingungen des Oszillators können ebenfalls mittels der integrierten piezoelektrischen Erreger- und Sensoreinheiten 351, 352 erfasst werden, welche mit einer Betriebs- und Auswerteschaltung 330 verbunden sind. Die Betriebs- und Auswerteschaltung 330 speist die integrierten piezoelektrischen Erreger- und Sensoreinheiten 351, 352 mit Erregersignalen und erfasst deren schwingungsabhängige Sensorsignale, um daraus einen Dichtemesswert und ggf. einen Massedurchflussmesswert zu ermitteln. Die Betriebs- und Auswerteschaltung 330 ist erfindungsgemäß ebenfalls dazu eingerichtet, Dichtefluktuationen anhand der Frequenzfluktuationen zu ermitteln und zu signalisieren. Dieser Messgerätetyp ist eingehend in der noch unveröffentlichten Patentanmeldung DE 10 2017 012 058.7 beschrieben. Die Biegeschwingungsmoden weisen Eigenfrequenzen zwischen einigen hundert Hz und einigen kHz auf. Anstelle des hier dargestellten Messrohrs mit C2-Symmetrie kann der Oszillator auch ein Messrohr mit einer Spiegelsymmetrie senkrecht zur Messrohrebene aufweisen, beispielsweise ein U-förmiges Messrohr, welches ebenfalls mit integrierten piezoelektrischen Erreger- und Sensoreinheiten versehen ist. Auch dieser Oszillator weist Biegeschwingungsmoden mit Eigenfrequenzen zwischen einigen hundert Hz und einigen kHz auf, wie in der noch unveröffentlichten Patentanmeldung DE 10 2017 012 058.7 beschrieben ist.

Allen beschriebenen Ausführungsformen ist gemein, dass entweder innerhalb eines Messgerätes verschiedene Schwingungsfrequenzen auftreten können, oder dass beim Vergleich zwischen verschiedenen Ausprägungen eines Gerätetyps unterschiedliche Eigenfrequenzen des Oszillators eine Analyse von Dichtefluktuationen auf Basis der Frequenzfluktuationen ohne Implementierung der vorliegenden Erfindung erschweren würden.

Die Dichte $\rho$ eines Mediums kann mittels eines Dichtemessers, der einen Oszillator mit mindestens einem schwingfähige Messrohr zum Führen des Mediums aufweist, anhand einer modenspezifischen, dichteabhängigen Eigenfrequenz $f_i$ des Oszillators ermittelt werden gemäß:

$$\rho(f_i) = c_{0,i} + \frac{c_{1,i}}{f_i^2}$$

Die Koeffizienten $c_{0,i}$ und $c_{1,i}$ sind modenspezifische Koeffizienten, die vorzugsweise für jeden Messgerätetyp, bzw. jedes Messgerät zu ermitteln sind. Der Koeffizient $c_{0,i}$ wird von der Masse des das Medium führenden Messrohrs geprägt, während der Koeffizient $c_{1,i}$ von einer modenspezifischen Steifigkeit des Messrohrs abhängt. Die zeitliche Ableitung der Dichte $\frac{\partial \rho}{\partial t}$ ist damit gegeben als:

$$\frac{\partial \rho}{\partial t} = c_{1,i} \frac{-2}{f_i^{\,3}} \frac{\partial f_i}{\partial t} .$$

Die zeitliche Ableitung der Dichte $\frac{\partial \rho}{\partial t}$ ist ein geeignetes Maß zur Beschreibung der Dichtefluktuation. Um diesen Wert zu ermitteln, ist die beobachtete Frequenzfluktuation $\frac{\partial f_i}{\partial t}$ des schwingenden Messrohrs bzw. der schwingenden Messrohre erfindungsgemäß noch mit einem Normierungsfaktor $c_{1,i}\frac{2}{f_i^3}$ zu multiplizieren. Auf diese Weise ist die Basis für eine Bewertungsfunktion geschaffen, welche den Inhomogenitätsgrad des Mediums in Form der Dichtefluktuationen unabhängig vom jeweiligen Typ des Dichtemessers bzw. dessen Größe beschreiben kann. Die Betriebs- und Auswerteschaltungen 30; 130; 230; 330 der obigen Ausführungsbeispiele eines erfindungsgemäßen Messgerätes sind in einer Ausgestaltung der Erfindung dazu eingerichtet, die Dichtefluktuation auf Basis der Frequenzfluktuation mittels der oben erläuterten Normierung mit dem Kehrwert der der dritten Potenz der modenspezifischen Eigenfrequenz durchzuführen:

$$\frac{\partial \rho}{\partial t} = c_{1,i}\frac{-2}{f_i^3}\frac{\partial f_i}{\partial t} .$$

Der Effekt der Erfindung anhand von Daten für zwei Coriolis-Massedurchflussmessgeräte aus dem Hause der Anmelderin, nämlich einen Promass F50 and einen Promass Q50, welche beide die Funktion eines Dichtemessgerätes aufweisen: Die beobachteten Eigenfrequenzfluktuationen $\frac{\partial f_i}{\partial t}$ unterscheiden sich bei einem wässrigen Medium mit einer Gasbeladung von 1% bzw. 2% um einen Faktor von etwa 6,6. Nach der Normierung mit dem Normierungsfaktor $c_{1,i}\frac{2}{f_i^3}$ ergibt sich daraus bei beiden Geräten etwa der gleiche Wert für die Dichtefluktuation $\frac{\partial \rho}{\partial t}$ .

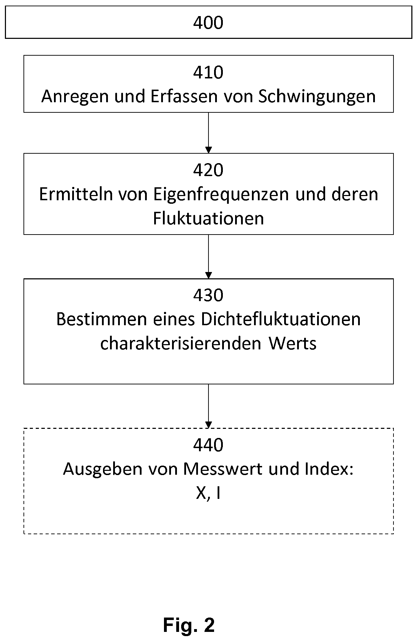

Ein Ausführungsbeispiel 400 des erfindungsgemäßen Verfahrens wird im Folgenden anhand von Fig. 2 erläutert.

In einem ersten Schritt 410 erfolgt das Anregen und Erfassen von Schwingungen mindestens einer Schwingungsmode eines Oszillators, der mit dem insbesondere strömenden Medium beaufschlagt ist. Die mindestens eine Schwingungsmode weist eine Eigenfrequenz auf, die von der Dichte des Mediums abhängt. Insofern erfolgt die Anregung der Schwingungen in einem Regelkreis, in welchem die Anregungsfrequenz beispielsweise geregelt wird, um die Schwingungsamplitude zu maximieren bzw. um einen konstanten Phasenwinkel zwischen 45° und 135° zwischen Erregersignal und Auslenkung des Oszillators einzuhalten.

Im nächsten Schritt 420 werden die jeweils aktuellen Anregungsfrequenzen erfasst, welche den aktuellen Werten der Eigenfrequenz des Oszillators entsprechen. Auf Basis der erfassten aktuellen Anregungsfrequenzen bzw. Eigenfrequenzen, wird eine Folge dieser Werte gebildet, auf deren Basis die Fluktuationen der Eigenfrequenz ermittelt wird, beispielsweise durch geeignete digitale Filter.

In einem nächsten Schritt 430 folgt die Normierung mit einem der obigen Faktoren, um einen Wert für die Dichtefluktuation am Messgerät zu ermitteln.

In einem optionalen Schritt 440 kann der so ermittelte Wert der Dichtefluktuation, oder ein davon abgeleiteter Indexwert I zusammen mit einem Messwert X, der ein Dichtemesswert, ein Massedurchflussmesswert oder ein Viskositätsmesswert sein kann, zu dessen Validierung ausgegeben werden. Aus dem Index I, der beispielsweise den Grad der Inhomogenität des Mediums beschreibt, kann geschlossen werden, wie valide der Messwert X ist.

## Patentansprüche

**1.** Messgerät (100) zum Bestimmen der Dichte, des Massedurchflusses und/oder der Viskosität eines fließfähigen Mediums, umfassend:

einen Oszillator (10), der mindestens ein schwingfähiges Messrohr (14) zum Führen des Mediums aufweist, und der mindestens eine Schwingungsmode aufweist deren Eigenfrequenz von der Dichte des Mediums abhängt;
einen Erreger (17) zum Anregen der Schwingungsmode;
mindestens einen Schwingungssensor (18, 19) zum Erfassen von Schwingungen des Oszillators (10); und
eine Betriebs- und Auswerteschaltung (30), die dazu eingerichtet ist, den Erreger mit einem Erregersignal zu beaufschlagen, Signale des Schwingungssensors zu erfassen, und anhand der Signale des Schwingungssensors aktuelle Werte der Eigenfrequenz des Oszillators sowie Fluktuationen der Eigenfrequenz zu ermitteln,
**dadurch gekennzeichnet, dass** die Betriebs- und Auswerteschaltung (30), weiter dazu eingerichtet ist, einen Dichtefluktuationen des Mediums charakterisierenden Wert zu bestimmen, wobei der Wert von einer Funktion abhängt, die eine eigenfrequenzabhängige Normierung aufweist, wobei die Funktion proportional ist zur Fluktuation der Eigenfrequenz und zur dritten Potenz des Kehrwerts der Eigenfrequenz.

**2.** Messgerät nach Anspruch 1, wobei die Funktion weiterhin proportional ist zu einer modalen Steifigkeit des Oszillators bei der zur Eigenfrequenz gehörenden Schwingungsmode des Oszillators.

**3.** Messgerät nach einem er vorhergehenden Ansprüche, wobei das Messrohr gebogen ist, und senkrecht zu einer durch seine Mittenlinie aufgespannten Messrohrebene eine Spiegelsymmetrie S2 oder eine Rotationssymmetrie C2 aufweist.

**4.** Messgerät nach Anspruch 3, wobei die Betriebs- und Auswerteschaltung dazu eingerichtet ist, das Messrohr in verschiedenen Schwingungsmoden mit unterschiedlichen modenspezifischen Eigenfrequenzen $f_i$ zum Schwingen anzuregen.

**5.** Messgerät nach Anspruch 3 oder 4, wobei der Oszillator mindestens ein Paar von schwingfähigen Messrohren zum Führen des Mediums aufweist.

**6.** Messgerät nach einem der vorhergehenden Ansprüche, wobei das Messgerät zwei voneinander unabhängige Oszillatoren mit jeweils einem Paar von Messrohren aufweist, wobei die beiden Oszillatoren für eine Biegeschwingungsnutzmode jeweils unterschiedliche Nutzmodeeigenfrequenzen aufweisen.

**7.** Messgerät nach einem der vorhergehenden Ansprüche, wobei der das Medium charakterisierende Wert einen Index, zum Klassifizieren des Mediums umfasst, insbesondere zum Klassifizieren hinsichtlich seiner Gasbeladung.

**8.** Messgerät nach einem der vorhergehenden Ansprüche, wobei die Betriebs- und Auswerteschaltung dazu eingerichtet, einem Dichtemesswert, einem Massedurchflussmesswert und/oder einem Viskositätsmesswert eine Bewertung zuzuordnen, die von dem die Dichtefluktuation charakterisierenden Wert abhängt, und beispielsweise auf den Grad der Inhomogenität des Mediums hinweist.

**9.** Verfahren zum Bestimmen der Dichte, des Massedurchflusses und/oder der Viskosität eines fließfähigen Mediums, umfassend:

Anregen und Erfassen von Schwingungen mindestens einer Schwingungsmode eines Oszillators, der mit dem Medium beaufschlagt ist, wobei die mindestens eine Schwingungsmode eine Eigenfrequenz aufweist, die von der Dichte des Mediums abhängt;
Ermitteln einer Folge von aktuellen Werten der Eigenfrequenz des Oszillators sowie Fluktuationen der Eigenfrequenz;
**dadurch gekennzeichnet, dass** das Verfahren weiter umfasst:
Bestimmen eines Dichtefluktuationen des Mediums charakterisierenden Werts, wobei der Wert von einer Funktion abhängt, die eine eigenfrequenzabhängige Normierung aufweist, wobei die Funktion proportional ist zur Fluktuation der Eigenfrequenz und zur dritten Potenz des Kehrwerts der Eigenfrequenz.

**10.** Verfahren nach Anspruch 9, wobei die Funktion weiterhin proportional ist zu einer modalen Steifigkeit des Oszillators bei der zur Eigenfrequenz gehörenden Schwingungsmode des Oszillators.

**11.** Verfahren nach einem der Ansprüche 9 bis 10, wobei einem Dichtemesswert, einem Massedurchflussmesswert und/oder einem Viskositätsmesswert eine Be zugeordnet wird, die von dem die Dichtefluktuation charakterisierenden Wert abhängt, und beispielsweise auf den Grad der Inhomogenität des Mediums hinweist.

**12.** Verfahren nach einem der Ansprüche 9 bis 11, wobei der das Medium charakterisierende Wert einen Index, zum Klassifizieren des Mediums umfasst, insbesondere zum Klassifizieren hinsichtlich seiner Gasbeladung.

## Claims

**1.** Measuring device (100) for determining the density, the mass flow and/or the viscosity of a flowing medium, comprising the following:

an oscillator (10) that has at least one measuring tube (14) which is able to vibrate, wherein said tube is designed to conduct the medium, and wherein said oscillator has at least one vibration mode whose natural frequency depends on the density of the medium;
an exciter (17) designed to excite the vibration mode;
at least a vibration sensor (18, 19) designed to measure the vibrations of the oscillator (10); and an operating and evaluation circuit (30), which is designed to apply an excitation signal to the exciter, capture signals of the vibration sensor and to determine, using the signals of the vibration sensor, current values of the natural frequency of the oscillator as well as fluctuations of the natural frequency,
**characterized in that** the operating and evaluation circuit (30) is further designed to determine a value characterizing density fluctuations of the medium, wherein the value depends on a function that has a normalization that depends on the natural frequency, wherein the function is proportional to the fluctuation of the natural frequency and to the third power of the inverse of the natural frequency.

**2.** Measuring device as claimed in Claim 1, wherein the function is further proportional to a modal rigidity of the oscillator for the vibration mode of the oscillator associated with the natural frequency.

3. Measuring device as claimed in one of the previous claims, wherein the measuring tube is curved and has a mirror symmetry S2 or a rotational symmetry C2 that is perpendicular to a measuring tube plane defined by its center line.

4. Measuring device as claimed in Claim 3, wherein the operating and evaluation circuit is designed to cause the measuring tube to vibrate in different vibration modes with different mode-specific natural frequencies $f_i$.

5. Measuring device as claimed in Claim 3 or 4, wherein the oscillator comprises at least a pair of measuring tubes capable of vibrating, wherein said tubes are designed to conduct the medium.

6. Measuring device as claimed in one of the previous claims, wherein the measuring device comprises two independent oscillators, each with one pair of measuring tubes, wherein the two oscillators each have different useful mode natural frequencies for a flexural vibration useful mode.

7. Measuring device as claimed in one of the previous claims, wherein the value characterizing the medium comprises an index for classifying the medium, specifically for classification with regard to the gas load.

8. Measuring device as claimed in one of the previous claims, wherein the operating and evaluation circuit is designed to attribute an evaluation to a density measured value, a mass flow measured value and/or a viscosity measured value, wherein said evaluation depends on the value characterizing the density fluctuation and, for example, indicates the degree of inhomogeneity of the medium.

9. Procedure designed to determine the density, the mass flow and/or the viscosity of a flowing medium, wherein said procedure comprises the following steps:

Excitation and measurement of vibrations of at least a vibration mode of an oscillator that is exposed to the medium, wherein the at least one vibration mode has a natural frequency that depends on the density of the medium;
Determination of a series of current values of the natural frequency of the oscillator as well as fluctuations of the natural frequency;
**characterized in that** the procedure further comprises the following step:
Determination of a value characterizing the density fluctuations of the medium, wherein the value depends on a function that has a normalization that depends on the natural frequency, wherein the function is proportional to the fluctuation of the natural frequency and to the third power of the inverse of the natural frequency.

10. Procedure as claimed in Claim 9, wherein the function is further proportional to a modal rigidity of the oscillator for the vibration mode of the oscillator associated with the natural frequency.

11. Procedure as claimed in one of the Claims 9 to 10, wherein an evaluation that depends on the value characterizing the density fluctuation is associated with a density measured value, a mass flow measured value and/or a viscosity measured value and, for example, indicates the degree of inhomogeneity of the medium.

12. Procedure as claimed in one of the Claims 9 to 11, wherein the value characterizing the medium comprises an index for classifying the medium, specifically for classification with regard to the gas load.

## Revendications

1. Appareil de mesure (100) destiné à la détermination de la densité, du débit massique et/ou de la viscosité d'un produit fluide, lequel appareil comprend les éléments suivants :

un vibrateur (10) qui présente au moins un tube de mesure (14) apte à vibrer, lequel tube est destiné à guider le produit, et lequel vibrateur présente au moins un mode de vibration dont la fréquence propre dépend de la densité du produit ;
un excitateur (17) destiné à exciter le mode de vibration ;
au moins un capteur de vibrations (18, 19) destiné à mesurer les vibrations du vibrateur (10) ; et
un circuit d'exploitation et d'évaluation (30), lequel est conçu pour appliquer un signal d'excitation à l'excitateur, pour acquérir les signaux du capteur de vibrations et pour déterminer, à l'aide des signaux du capteur de vibrations, des valeurs actuelles de la fréquence propre du vibrateur ainsi que des fluctuations de la fréquence propre,
**caractérisé en ce que** le circuit d'exploitation et d'évaluation (30) est en outre conçu pour déterminer une valeur caractérisant les fluctuations de densité du produit, la valeur dépendant d'une fonction qui présente une normalisation dépendant de la fréquence propre, la fonction étant proportionnelle à la fluctuation de la fréquence propre et à la troisième puissance de l'inverse de la fréquence propre.

2. Appareil de mesure selon la revendication 1, pour lequel la fonction est en outre proportionnelle à une rigidité modale du vibrateur pour le mode de vibration du vibrateur associé à la fréquence propre.

3. Appareil de mesure selon l'une des revendications précédentes, pour lequel le tube de mesure est courbé et présente une symétrie spéculaire S2 ou une symétrie de rotation C2 perpendiculairement à un plan de tube de mesure défini par sa ligne médiane.

4. Appareil de mesure selon la revendication 3, pour lequel le circuit d'exploitation et d'évaluation est conçu pour faire vibrer le tube de mesure dans différents modes de vibration avec différentes fréquences propres $f_i$ spécifiques au mode.

5. Appareil de mesure selon la revendication 3 ou 4, pour lequel le vibrateur comprend au moins une paire de tubes de mesure apte à vibrer, lesquels tubes sont destinés à guider le produit.

6. Appareil de mesure selon l'une des revendications précédentes, l'appareil de mesure comprenant deux vibrateurs indépendants l'un de l'autre, avec chacun une paire de tubes de mesure, les deux vibrateurs présentant chacun des fréquences propres de mode utile différentes pour un mode utile de vibration de flexion.

7. Appareil de mesure selon l'une des revendications précédentes, pour lequel la valeur caractérisant le produit comprend un indice permettant de classer le produit, notamment pour le classer en fonction de sa charge en gaz.

8. Appareil de mesure selon l'une des revendications précédentes, pour lequel le circuit d'exploitation et d'évaluation est conçu pour attribuer à une valeur mesurée de densité, à une valeur mesurée de débit massique et/ou à une valeur mesurée de viscosité, une évaluation qui dépend de la valeur caractérisant la fluctuation de densité et qui indique par exemple le degré de non-homogénéité du produit.

9. Procédé destiné à la détermination de la densité, du débit massique et/ou de la viscosité d'un produit fluide, lequel procédé comprend les étapes suivantes :

   Excitation et mesure des vibrations d'au moins un mode de vibration d'un vibrateur qui est soumis au produit, l'au moins un mode de vibration présentant une fréquence propre qui dépend de la densité du produit ;
   Détermination d'une séquence de valeurs actuelles de la fréquence propre du vibrateur ainsi que des fluctuations de la fréquence propre ;
   **caractérisé en ce que** le procédé comprend en outre l'étape suivante :
   Détermination d'une valeur caractérisant les fluctuations de densité du produit, la valeur dépendant d'une fonction présentant une normalisation dépendant de la fréquence propre, la fonction étant proportionnelle à la fluctuation de la fréquence propre et à la puissance 3 de l'inverse de la fréquence propre.

10. Procédé selon la revendication 9, pour lequel la fonction est en outre proportionnelle à une rigidité modale du vibrateur pour le mode de vibration du vibrateur associé à la fréquence propre.

11. Procédé selon l'une des revendications 9 à 10, pour lequel on associe à une valeur mesurée de densité, à une valeur mesurée de débit massique et/ou à une valeur mesurée de viscosité une évaluation qui dépend de la valeur caractérisant la fluctuation de densité et qui est par exemple indicative du degré de non-homogénéité du produit.

12. Procédé selon l'une des revendications 9 à 11, pour lequel la valeur caractérisant le produit comprend un indice permettant de classer le produit, notamment pour le classer en fonction de sa charge en gaz.

1
30
10
100
130
110
114
115
116
118
120
122
124
126
132
134
140
142
151
152
153
154
w
h
Y
Z

Fig. 1a

Fig. 1b

200
210d
210c
210b
210a
220
222
224
230
300
310
321
351
322
352
330
331
332
333
334
335
340
C2
y
z

Fig. 1c

Fig. 1d

400
410
Anregen und Erfassen von Schwingungen
420
Ermitteln von Eigenfrequenzen und deren
Fluktuationen
430
Bestimmen eines Dichtefluktuationen
charakterisierenden Werts
440
Ausgeben von Messwert und Index:
X, I

**Fig. 2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102009002941 A1
- US 7360453 B2
- DE 102017012058
- WO 2016107694 A1
- DE 102016125615